# EUROPEAN PATENT APPLICATION

(11) **EP 1 729 250 A1**
(43) Date of publication of application: **06.12.2006**
(21) Application number: 05710739.3
(22) Date of filing: 25.02.2005
(51) Int. Cl.: G06Q 10/00

(54) **TERMINAL DEVICE, SERVER DEVICE, TERMINAL CHECK METHOD, TERMINAL PROGRAM, AND STORAGE MEDIUM**

(30) Priority: 27.02.2004 JP 2004054697
(71) Applicant: Bitwallet Inc., Tokyo 141-0032 (JP)
(72) Inventor: Yamada, Kazuki, BitWallet, Inc., Tokyo 1410032 (JP); Yamada, Hiroyuki, BitWallet, Inc., Tokyo 1410032 (JP); Ito, Koji, BitWallet, Inc., Tokyo 1410032 (JP); Shimizu, Yasuhiro, BitWallet, Inc., Tokyo 1410032 (JP); Kamata, Yoshito, BitWallet, Inc., Tokyo 1410032 (JP)
(74) Representative: Cloughley, Peter Andrew
(86) International application number: PCT/JP2005/003189
(87) International publication number: WO 2005/083606

(57) **Abstract**

A program product for causing a computer to function as a terminal for processing an electronic money card is prepared and distributed to a member store. The member store installs it in the computer and uses as a member store terminal. The computer for installation may be a general-purpose computer, such as a personal computer, for example, capable of substantially reducing burdens of terminal installation on the member store side and of terminal management on the electronic money center side. The terminal application is configured so that the hardware information of the predetermined hardware provided in the computer for installation may be collected and stored at the time of installation. The terminal application then acquires the hardware information from this hardware at the time of starting of the member store terminal to compare it with the hardware information stored at the time of installation.

## Description

### BACKGROUND OF THE INVENTION

### 1. Field of the Invention

The present invention relates to a terminal unit, a server unit, a terminal verification method, a terminal program product, and a storage medium, and relates to those which process electronic money stored in an IC card, for example.

### 2. Description of the Related Art

In recent years, large-scale practical application experiments of electronic money (electronic cash) conducted with the cooperation of general retail stores and consumers have successfully ended, and the age of the electronic money is coming in this country.

An electronic money system put into practical use at present stores the amount of money of monetary value in an electronic money card which is configured by a non-contact IC card, for example.

The electronic money card is provided with a CPU (Central Processing Unit), and can increase/decrease the amount of money of the monetary value in the card by inputting an addition command or a subtraction command to cause the CPU to execute the command.

The business proprietor who provides products, services, or the like using the electronic money has registered with a sponsor of the electronic money system (hereinafter, the electronic money center) to form a member store, and has been provided with a dedicated terminal for accessing the electronic money card. The member store uses the dedicated terminal instead of cash transfer to thereby perform a commercial transaction by increasing/decreasing the balance in the electronic money card of a customer.

The dedicated terminal accumulates transaction histories concerning the performed processing as log data, and summarizes the data in batch processing for several times per day to transmit it to a server of the electronic money center (hereinafter, the center server).

When the dedicated terminal is not connected with a network and is used as a stand-alone type, a person in charge collects a storage medium for storing the log data, and inputs the log data into the center server in the electronic money center.

The center server accumulates and adds up the log data collected from the dedicated terminal, performs adjustment processing of each member store in accordance with the commercial transaction by the electronic money, and in addition to that, manages information including using history and balance of each electronic money card.

Having decided to install the dedicated terminal in the member store as described above is mainly based on the following reasons.

### (1) Security Assurance

The present electronic money system is operated under basic principles in that the system is a settlement system which anyone can use without requiring advance registration or the like for utilization, and in situ dealing is valid as with cash transaction (settlement is completed by the in situ dealing).

For this reason, unlike the settlement with a credit card, the electronic money does not perform cancellation of a user due to an illegal use or the like.

Therefore, the terminal used for the charging and settlement of the electronic money is required for certainly preventing an external alteration and tapping of the transaction histories, and for taking the compatibility of the electronic money card and the center server, so that, from such business requirements, the dedicated terminal for incorporating security-related functions into a black box is installed in the member store to assure the security of the transaction histories and communication.

### (2) Provision for Network Environment

In addition, one of the reasons that the dedicated terminal has been made to perform the batch processing is because a broadband environment where network communication has been available at high speed has not been prepared at the time of launch of operation.

In other words, it is because the charging and settlement processing can be performed at high speed and consistently even in a low-speed network by completing, for the moment, the information processing with the electronic money card between the dedicated terminal and the electronic money card, and subsequently transmitting the log data as a batch to a control center.

The technique using the electronic money includes the following.

PATENT DOCUMENT 1: Japanese Unexamined Patent Publication (Kokai) No. 2003-141428

This technique circulates the electronic money by storing the monetary value into the non-contact IC card carried by the user, and subtracting/adding the value therefrom/thereto.

### SUMMARY OF THE INVENTION

However, when a dedicated terminal is installed as described above, there is a problem of an increase in burdens of manufacturing cost and management of the dedicated terminal. Particularly, since the dedicated terminal has a built-in settlement module which performs charging and settlement processing as well as communication by means of encryption, it is required to carry out thorough management of the whole stage from a manufacturing stage to a recovery at the time when the terminal becomes unnecessary, and in addition to that, it is also required to severely manage member stores.

Moreover, since the inventory figures and the number of production of the dedicated terminals are limited, it may be impossible to deal with an introductory request when large-sized chain stores, a large-scale retailers, or the like join as the member stores to thereby require a lot of dedicated terminals at a time.

In addition to that, since the current dedicated terminal transmits log data in batch processing, there arises a problem of causing a time difference between the record in an electronic money card and the record at an electronic money center side. For this reason, it is difficult to immediately reflect invalid card information registered at the electronic money center side to services, for example.

Therefore, it is an object of the present invention to provide a processing terminal unit or the like for the electronic money, which can be introduced and managed at low cost.

In order that the present invention achieves the foregoing objects, the invention according to claim 1 provides a terminal unit for receiving a processing instruction from a predetermined server unit and inputting it to a mobile unit including money information storage means for storing money information which represents the amount of money of a monetary value as electronic data, and money information processing means for modifying the amount of money represented by the stored money information by executing the predetermined processing instruction, including: unique information acquisition means for acquiring unique information from hardware which configures the terminal unit at predetermined time, the unique information being unique to the hardware; and restriction means for restricting input processing of the processing instruction to the mobile unit when the acquired unique information does not match with registered unique information registered preliminarily as the unique information of the hardware.

The invention according to claim 2 provides the terminal unit according to claim 1, including unique information storing means for acquiring the unique information of the hardware and storing it to a predetermined storing destination before initially inputting the processing instruction to the mobile unit, wherein the restriction means uses the stored unique information as the registered unique information.

The invention according to claim 3 provides the terminal unit according to claim 1 or 2, including secret information for starting request means for requesting input of secret information for starting at the time of starting of the terminal unit, wherein the restriction means restricts input processing of the processing instruction to the mobile unit when the secret information for starting inputted in response to the request does not match with the secret information for starting set preliminarily for the terminal unit.

This restriction can be realized by stopping starting of the terminal unit, for example.

The invention according to claim 4 provides the terminal unit according to claim 1, 2, or 3, wherein the predetermined server unit includes registration information storage means for storing user specifying information which specifies a user of the terminal unit, terminal allocation information allocated to the terminal unit, and terminal identification information of the terminal unit in association with each other, including: terminal identification information generation means for generating terminal identification information which identifies the terminal unit and stores it in a storage installed in the terminal unit; and terminal registration information transmitting means for transmitting the generated terminal identification information and the terminal allocation information to the predetermined server unit, and wherein the terminal unit, after transmitting the terminal identification information and the terminal allocation information, uses the terminal identification information for the predetermined server unit as the information for identifying the terminal unit.

The invention according to claim 5 provides the terminal unit according to any one of claims 1 through 4, including operation time receiving means for receiving the input of continuous operation time of the terminal unit, wherein the restriction means restricts the input processing of the processing instruction to the mobile unit when the received continuous operation time passes from the starting of the terminal unit.

The invention according to claim 6 provides a server unit for transmitting the processing instruction to the terminal unit according to claim 4, including: registration information storage means for storing user specifying information which specifies a user of the terminal unit, terminal allocation information allocated to the terminal unit, and terminal identification information of the terminal unit in association with each other; input means for inputting the user specifying information and the terminal allocation information into the registration information storage means; terminal identification information receiving means for receiving the terminal identification information transmitted from the terminal unit, and the terminal allocation information; and terminal registration means for storing the user specifying information corresponding to the terminal allocation information and the received terminal identification information in association with each other.

Here, the terminal registration means may be configured, for example, to check the received terminal allocation information with the terminal allocation information stored by the registration information storage means and to store user specifying information associated with the checked terminal allocation information and the received terminal identification information by the registration information storage means in association with each other.

The invention according to claim 7 provides the server unit according to claim 6, including: terminal identification information receiving means for receiving terminal identification information of the terminal unit from the terminal unit at the time of transmitting a processing instruction to the terminal unit; user specifying information acquisition means for acquiring user specifying information associated to the terminal identification information by checking the received terminal identification information with terminal identification information stored by the terminal registration means; and adding-up means for adding up the changed amount of money of a monetary value accompanying the processing instruction transmitted to the terminal unit for a user specified by the acquired user specifying information.

The invention according to claim 8 provides a terminal verification method performed by a terminal unit for receiving a processing instruction from a predetermined server unit and inputting it to a mobile unit including money information storage means for storing money information which represents the amount of money of a monetary value as electronic data, and money information processing means for modifying the amount of money represented by the stored money information by executing the predetermined processing instruction, wherein the terminal unit includes unique information acquisition means and restriction means, and including the steps of: unique information acquisition for acquiring unique information from the predetermined hardware which configures the terminal unit at predetermined time by the unique information acquisition means, the unique information being unique to this hardware; and restriction for restricting input processing of the processing instruction to the mobile unit when the acquired unique information does not match with registered unique information registered preliminarily as the unique information of the hardware by the restriction means.

The invention according to claim 9 provides a terminal program product for implementing a function by a terminal unit constituted by a computer for receiving a processing instruction from a predetermined server unit and inputting it to a mobile unit including money information storage means for storing money information which represents the amount of money of a monetary value as electronic data, and money information processing means for modifying the amount of money represented by the stored money information by executing the predetermined processing instruction, wherein the computer implements: a unique information acquisition function for acquiring unique information from the predetermined hardware which configures the terminal unit at predetermined time, the unique information being unique to this hardware; and a restriction function for restricting input processing of the processing instruction to the mobile unit when the acquired unique information does not match with registered unique information registered preliminarily as the unique information of the hardware.

The invention according to claim 10 provides the terminal program product according to claim 9, wherein the computer implements: a secret information for installation request function for requesting input of secret information for installation at the time of installation of the terminal program product into the computer; and an installation processing restriction function for restricting installation processing of the terminal program product when the secret information for installation inputted in response to the request does not match with the secret information for installation set preliminarily for the terminal program product.

The invention according to claim 11 provides the terminal program product according to claim 9 or 10, implementing a unique information storing function for acquiring the unique information being unique to this hardware from the predetermined hardware which configures the terminal unit and storing it to a predetermined storing destination at the time of installation of the terminal program product to the terminal unit, wherein the restriction function uses the stored unique information as the registered unique information.

The invention according to claim 12 provides the terminal program product according to claim 9, 10, or 11, wherein the predetermined server unit includes registration information storage means for storing user specifying information which specifies a user of the terminal unit, terminal allocation information allocated to the terminal unit, and terminal identification information of the terminal unit in association with each other, wherein the computer implements: a terminal identification information generation function for generating terminal identification information which identifies the terminal unit and stores it in a storage installed in the terminal unit; and a terminal registration information transmitting function for transmitting the generated terminal identification information and the terminal allocation information to the predetermined server unit.

The invention according to claim 13 provides a computer-readable storage medium for storing the terminal program product according to any one of claims 9 through 12.

According to the present invention, the terminal unit or the like for processing the electronic money can be installed and managed at low cost.

### BRIEF DESCRIPTION OF THE DRAWINGS

FIG. 1 illustrates a configuration of an electronic money system of the present embodiment;
FIG. 2 illustrates an electronic money card;
FIG. 3 illustrates a member store terminal;
FIG. 4 illustrates a center server;
FIG. 5 is a flow chart for illustrating a procedure for installing a terminal application in the member store terminal;
FIG. 6 is a flow chart for illustrating a procedure for starting the terminal application;
FIG. 7 is a flow chart for illustrating a procedure when the member store terminal is stolen;
FIG. 8 is a flow chart for illustrating operation of the copied terminal application;
FIG. 9 is a flow chart for illustrating a procedure when adding the member store terminal;
FIG. 10 is a flow chart for illustrating an information processing procedure performed by the member store terminal in an usual operation;
FIG. 11 illustrates an example of a screen displayed when installing the terminal application; and
FIG. 12 illustrates an example of the screen displayed when starting the terminal application.

### DESCRIPTION OF THE PREFERRED EMBODIMENTS

### (1) Brief Description of Embodiment

A program product (hereinafter, the terminal application) for causing a computer to function as a terminal for processing an electronic money card (member store terminal) is prepared and distributed to a member store.

The member store installs it in the computer and uses as the member store terminal. The computer for installation may be a general-purpose computer, such as a personal computer, for example, which can substantially reduce burdens of terminal installation on the member store side and of terminal management on the electronic money center side.

The terminal application is configured so that hardware information of predetermined hardware provided in the computer for installation may be collected and stored at the time of installation.

The terminal application then acquires the hardware information from this hardware at the time of starting of the member store terminal to compare it with the hardware information stored at the time of installation.

The terminal application is configured to continue starting processing when the identity of both of them can be verified, or to stop the starting processing when the identity cannot be verified.

As described, by verifying the identity of the hardware information, it can ensure that the member store terminal to be activated is the registered member store terminal, and can prevent an illegal act such as unauthorized copying of the terminal application from the member store terminal.

The terminal application of the present embodiment is configured so that an initial registration password is required at the time of installation, and thus even when a third party acquires an install program of the terminal application, it cannot be installed in the computer.

Moreover, the terminal application is configured so that an operational password is required at the time of starting, and thus even when the third party steals the member store terminal, the terminal application cannot be started.

In addition, network environment has been improved significantly with broadbandization in recent years, the member store terminal is connected with a center server to process the electronic money card on line.

For this reason, the use of the electronic money card against an unauthorized use can be stopped immediately, for example.

### 2. Details of Embodiment

At a commercial transaction by electronic money, transfer of an exchange value is caused by adjusting the value of electronic information, referred to as a value, to which the exchange value equivalent to money is imparted.

The value is stored in the electronic money card, i.e., an IC card having a value processing function, and is carried by a user.

Purchasing of a product or service using the value can be performed at the member store which has made the contract for conducting the commercial transaction by the value.

The member store has the member store terminal which accesses the electronic money card installed in the store, subtracts the value stored in the electronic money card of the user by the price for making settlement.

In addition, by paying the money to the member store, the value for the amount of money can be written in the electronic money card. The processing for writing the value in the electronic money card as described above is referred to as charging.

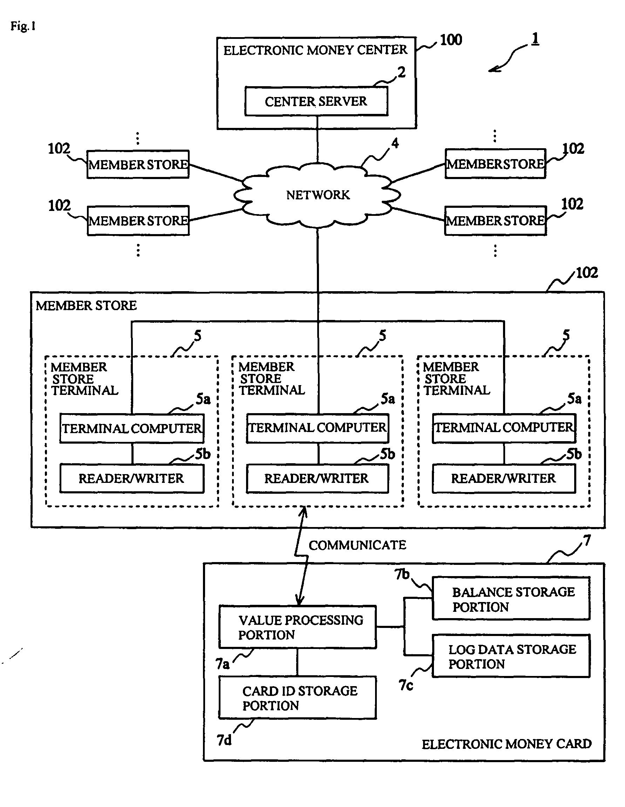

FIG. 1 is a block diagram schematically illustrating a configuration of an electronic money system of the present embodiment.

An electronic money system 1 is configured using a center server 2 installed in an electronic money center 100, member store terminals 5, 5, 5, ..., installed in each member store 102, a network 4 for network-connecting the center server 2 and the member store terminals 5, 5, 5, ..., and an electronic money card 7 which communicates wirelessly at a short distance with the member store terminal 5.

The electronic money center 100, an entity for maintaining and managing the operation of the electronic money system 1, operates the center server 2.

The center server 2 is always connected with the member store terminal 5, and can communicate with the member store terminal 5 in real time to generate and transmit an addition command or a subtraction command in accordance with a request from the member store terminal 5.

In addition, the center server 2, as described later in detail, manages the member store terminal 5 such as performing registration processing of the member store terminal 5 when this member store terminal 5 is newly installed on the member store 102 side.

Although the center server 2 and the member store terminals 5, 5, 5, ..., are always connected in the present embodiment, the configuration is not limited thereto and it may be configured so that the member store terminal 5 is connected to the center server 2 if needed.

The member store 102 is a store for providing a product or service to a customer, such as a convenience store and a restaurant, and can use the value as price remuneration of the product or service, for example.

The member store 102 equips a cash register with the member store terminal 5, for example, and uses it for carrying out the settlement by subtracting the value for the price remuneration from the electronic money card 7 of the customer. In addition, the value can be charged to the electronic money card 7 for the amount of money received from the customer.

Although the member store terminal 5 can perform both the settlement and charging in the present embodiment, it may be configured to perform either of the settlement or charging.

The member store terminal 5 is configured by a terminal computer 5a and a reader/writer 5b.

The terminal computer 5a can be configured by installing (incorporating) the terminal application in the general-purpose computer, such as the personal computer. The terminal application is application software (application program product) for causing the computer to function as the member store terminal 5, and is provided from the electronic money center 100.

By configuring the terminal computer 5a with the general-purpose computer, various costs can be reduced including installation cost or introductory cost on the member store 102 side, management cost on the electronic money center 100 side, and recovery cost.

Note that it can be configured using a special-purpose machine incorporating a module having functions equivalent to those of the terminal application.

The reader/writer 5b is a peripheral unit of the terminal computer 5a, and has a built-in antenna for performing wireless communication at a short distance with the electronic money card 7.

The member store terminal 5 supplies power to the electronic money card 7 wirelessly to drive it for performing communication.

The user of the electronic money card 7 brings the electronic money card 7 close to the reader/writer 5b at the time of use.

The terminal computer 5a then accesses the electronic money card 7 via the reader/writer 5b, and can input the addition command and subtraction command transmitted from the center server 2 into the electronic money card 7.

The electronic money card 7 is a non-contact IC card with a value processing function incorporated therein, provided with an IC chip for performing the value processing function and an antenna for performing wireless communication with the reader/writer 5b.

The electronic money card 7 stores the amount of money of the value, executes the addition and subtraction commands inputted from the reader/writer 5b to add/subtract the amount of money of the value.

The electronic money card 7 is a type of prepaid card which stores electronic intelligence (value) representing the exchange value associated with the money.

FIG. 1 also illustrates a functional configuration of the electronic money card 7, and as illustrated, the electronic money card 7 is provided with a value processing portion 7a, a balance storage portion 7b, a log data storage portions 7c, a card ID storage portion 7d, or the like.

The balance storage portion 7b is the storage portion which stores a current balance of the value. At the time of settlement or charging, the amount of money of the value stored in the balance storage portion 7b is increased or decreased. The balance storage portion 7b configures money information storage means for storing the amount of money of the monetary value as electronic data (value).

The log data storage portion 7c is the storage portion which stores transaction histories as log data. The transaction histories include, for example, date and time of the transaction, ID information of the member store terminal which has performed the transaction, the type of the transaction, i.e., the settlement or charging, and the amount of money transacted.

The transaction history is stored, for example, six cases at the maximum, and is eliminated sequentially from the oldest case.

The card ID storage portion 7d is the storage portion which stores a card ID. The card ID is the ID information provided uniquely to the electronic money card 7 in the electronic money system 1, and the electronic money center 100 can specify the electronic money card 7 by the card ID. Although the card ID is imparted to the electronic money card 7 by the electronic money center 100, the ID information may be used which is imparted to the electronic money card 7 by a manufacturer of the electronic money card 7.

Any ID information is stored in the electronic money card 7, and ID information can be read by inputting a predetermined command into the electronic money card 7.

The value processing portion 7a is an information processing portion for executing various commands inputted from the reader/writer 5b.

The value processing portion 7a, when received the input of the addition command or the subtraction command, adds or subtracts the value of the balance storage portion 7b by the amount of money which is attached to these commands as a parameter.

The value processing portion 7a then updates the transaction histories of the log data storage portion 7c when the information is processed.

As described above, the value processing portion 7a configures money information processing means for modifying the amount of money represented by the money information by executing a predetermined processing instruction (such as the addition command and subtraction command). The electronic money card 7 configures a mobile unit provided with the money information storage means and the money information processing means.

There are various commands received by the value processing portion 7a other than the addition and subtraction commands, including those for reading and outputting the card ID from the card ID storage portion 7d, and for returning the balance of the balance storage portion 7b, for example.

While the electronic money card 7 communicates with the center server 2 via a path constituted by the network 4, the terminal computer 5a, and the reader/writer 5b in the present embodiment, the communication is encrypted and thus the electronic money card 7 is provided also with the function to perform encryption and decryption for it.

More particularly, the electronic money card 7 and the center server 2 transmits/receives the encrypted information via the communication path (constituted by the network 4, the terminal computer 5a, and the reader/writer 5b) encrypted using the technique such as SSL (Secure Sockets Layer).

As described above, the information or functions required for encryption can be held and managed by the center server 2 in the electronic money system 1, so that the member store terminal 5 is not necessary to be equipped with an important function concerning encryption and to be managed strictly as a conventional dedicated terminal (having a built-in encryption module).

The network 4 is configured by, for example, the Internet, where the communication is performed between the center server 2 and the member store terminal 5.

Since the value of the electronic money card 7 is processed on line in the present embodiment, it is desirable for the network 4 to be the highspeed network that corresponds to a so-called broadband.

The network 4 may be configured by a WAN (Wide Area Network), a LAN (Local Area Network), or the like, or it can utilize a communication line using a communication satellite, a telephone network, an optical cable network, or the like.

Furthermore, when the member store 102 is a movable body such as a taxi, a bus, a stall, a vessel, or an aircraft, it can also be configured so that the center server 2 and the member store terminal 5 communicate via a wireless communication line.

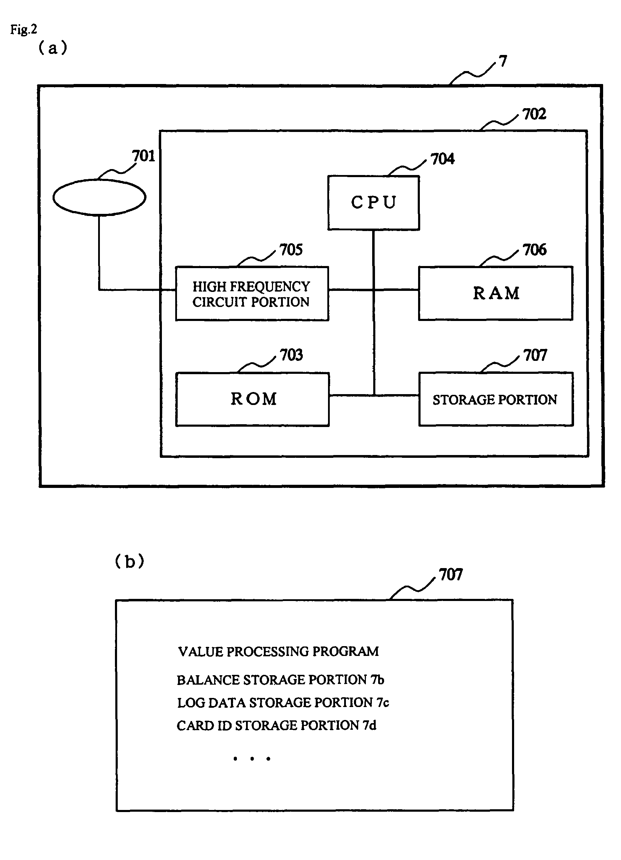

FIG. 2(a) is a block diagram schematically illustrating an example of a hardware configuration of the electronic money card 7.

The electronic money card 7 is a plastic card having an antenna 701 and an IC chip 702 built therein.

Although the non-contact IC card is used as the electronic money card 7 in the present embodiment, it may be configured by a contact IC card. In this case, the electronic money card 7 is provided with a contact terminal for accessing the IC chip 702 instead of the antenna 701. The member store terminal 5 is also provided with a terminal for connecting to the contact terminal, so that the electronic money card 7 and the member store terminal 5 communicate via these terminals.

The antenna 701 is an element for performing wireless communication with the antenna provided in the reader/writer 5b.

The antenna 701 receives an electric wave emitted by the reader/writer 5b and emits the electric wave to the reader/writer 5b.

The antenna 701 also has a power generation function which receives supply of power from the reader/writer 5b wirelessly to generate the power for driving the IC chip 702.

The IC chip 702 is a type of computer provided with various elements including a ROM (Read Only Memory) 703, a CPU (Central Processing Unit) 704, a high frequency circuit portion 705, a RAM (Random Access Memory) 706, and a storage portion 707. These elements are formed in one IC chip.

The CPU 704 is a central processing unit for processing information or controlling the whole operation of the electronic money card 7 in accordance with various kinds of program products.

The ROM 703 is a read-only memory which stores fundamental program products (OS (Operating System), a communications program product with the reader/writer 5b, or the like) and the various data for operating the electronic money card 7.

The high frequency circuit portion 705 is an interface which communicates with the reader/writer 5b via the antenna 701. The CPU 704 can communicate wirelessly with the reader/writer 5b via the high frequency circuit portion 705.

The RAM 706 is a readable/writable volatile memory which provides a working area when the CPU 704 performs various types of information processing. In the present embodiment, it is used when the CPU 704 executes the addition command or the subtraction command to increase/decrease the amount of money of the value, for example.

The storage portion 707 is configured by an EEPROM (Electrically Erasable and Programmable ROM), for example, and is a nonvolatile memory which is readable/writable of the information by the CPU 704.

The storage portion 707 can store (install) various kinds of application software to cause the CPU 704 to execute them and to cause the electronic money card 7 to perform various kinds of functions.

In the present embodiment, the value processing program is stored, which is a program for causing the CPU 704 to function as the electronic money card 7.

FIG. 2(b) a diagram schematically illustrating the information stored in the storage portion 707.

The storage portion 707 stores the value processing program, while the balance storage portion 7b, the log data storage portion 7c, the card ID storage portion 7d, and the like are formed therein.

When the electronic money card 7 is driven by bringing it close to the reader/writer 5b, the CPU 704 executes the value processing program and the value processing portion 7a is configured as the software. Thereby, the balance storage portion 7b, the log data storage portion 7c, and the card ID storage portion 7d are accessed so that various kinds of information processing can be performed.

Although the value processing program is stored in the storage portion 707 and the value processing function is achieved by the electronic money card 7 in the present embodiment, other program products may be stored in the storage portion 707 and started selectively in accordance with the use.

Thereby, the electronic money card 7 may be utilized as a point card or a prepaid card for traffic freight adjustment of transportation.

Furthermore, in recent years, the attempt has been carried out where the IC chip 702 is build in a portable terminal such as a cellular phone and such a portable terminal is provided with a function as the non-contact IC card.

In the form of use, the portable terminal is provided with the IC chip 702 and the antenna 701 enabling access wirelessly from the reader/writer 5b as with the electronic money card 7, and in addition to that, it is possible to display the information in the IC chip 702 on a display unit equipped in the portable terminal or to input the information into the IC chip 702 via an input unit of the portable terminal.

Although the present embodiment will be hereinbelow described using the electronic money card 7, such portable terminals having the IC chips 702 can also be used.

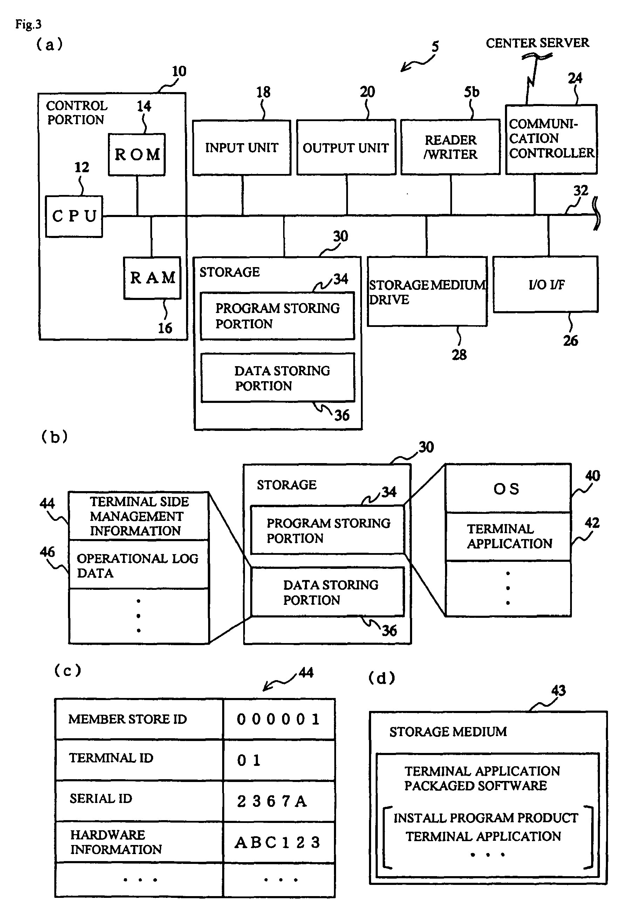

FIG. 3(a) is a block diagram schematically illustrating a hardware configuration of the member store terminal 5.

While the member store terminal 5 can be configured using the special-purpose machine, it can also be configured using the general-purpose personal computer with the reader/writer 5b installed therein.

The member store terminal 5 is configured by a control portion 10 connected with an input unit 18, an output unit 20, a communication controller 24, a storage 30, a storage medium drive 28, an input/output interface (I/F) 26, or the like via a bus line 32.

The control portion 10 is constituted by a CPU 12, a ROM 14, a RAM 16, and the like.

The CPU 12 is a central processing unit which loads and executes the program product stored in the ROM 14, the storage 30, or the like. In the present embodiment, it executes the terminal application stored in the storage 30 to function as the member store terminal 5.

The ROM 14 is, for example, a read-only non-volatile memory which stores various programs products, the data, and the parameters for performing fundamental control for the CPU 12 to function. The program product in the ROM 14 is executed at the time of starting of the member store terminal 5, for example.

The RAM 16 is a readable/writable memory which the CPU 12 uses as a working memory to be used when performing the terminal application, for example.

The input unit 18 is configured by an input unit, such as a keyboard, a mouse, and a bar code reader.

The keyboard is configured by keys for inputting such as kana (Japanese characters) or English characters, ten keys for inputting numbers, various function keys, a cursor key, and other keys.

In the present embodiment, the keyboard can be used, for example, for inputting the initial registration password at the time of installing the terminal application, or for inputting the operational password at the time of starting the terminal application.

In addition, upon performing service, necessary operations can be performed from the keyboard for the charging or settlement of the electronic money card 7.

The bar code reader is a unit which reads a bar code displayed on the product, and can read the information which specifies the product concerning the settlement, the price of the product, or other information.

The mouse is a pointing unit. When operating the member store terminal 5 using a GUI (Graphical User Interface) or the like, predetermined information can be inputted by clicking on such as a button or an icon displayed on the display unit with the mouse.

While various screens are displayed on the display unit when installing or starting the terminal application in the present embodiment, the information can be inputted from these screens by mouse operation.

The output unit 20 is configured by the display unit, a printer, or the like, for example.

The display unit is a unit for displaying the information on the screen, configured by a CRT (Cathode Ray Tube) display, a liquid crystal display, a plasma display, or the like, for example.

The display unit can display an initial registration password entry screen at the time of installing the terminal application or an operational password entry screen at the time of starting the terminal application.

During operation of the member store terminal 5, it can display various kinds of screens concerning the service.

The printer is a unit for printing on print media such as paper, for example, and is configured by various printers, such as an ink jet printer, a laser printer, a thermal transfer printer, or a dot impact printer.

A receipt issued to the customer can be printed with the printer.

The communication controller 24 is a unit for connecting the member store terminal 5 to the network 4, configured by a modem, a terminal adopter, and other connection units.

The communication controller 24 is controlled by the CPU 12, where the data or other information is transmitted or received from/to the center server 2 in accordance with a predetermined protocol.

The storage 30 is configured by the readable/writable storage medium and a drive for reading/writing the program or the data from/to the storage medium. Although a hard disk is mainly used as this storage medium, it is also possible to configure with other readable/writable storage media such as a magneto-optic disk, a magnetic disk, a semiconductor memory, for example.

In the storage 30, there is formed a program storing portion 34 which stores various kinds of programs and a data storing portion 36 which stores various kinds of data.

As illustrated in FIG. 3(b), the program products such as an OS 40, a terminal application 42, ... are installed in the program storing portion 34.

The OS 40 is a program product which achieves fundamental functions for operating the member store terminal 5, such as input/output of a file or control of the peripheral unit including the reader/writer 5b.

The terminal application 42 is application software provided by the electronic money center 100, and is a program product for causing the member store terminal 5 to function as the member store terminal. The terminal application 42 is provided to the member store 102 stored in the storage medium (described later) such as CD-ROM, for example, and installed in the member store terminal 5. The functions caused by the terminal application 42 to perform will be described later in detail.

As illustrated in FIG. 3(b), terminal side management information 44, operational log data 46, ... are stored in the data storing portion 36.

The terminal side management information 44 is formed by installing the terminal application 42, and stores various kinds of data required for the value processing of the electronic money card 7. More specifically, as illustrated in FIG. 3(c), the information such as a member store ID, a terminal ID, a serial ID, hardware information, ... is stored.

The member store ID is ID information imparted by the electronic money center 100 to the member store 102, so that the electronic money center 100 can specify each member store by the member store ID. The member store ID configures user specifying information which specifies the user of the member store terminal 5.

The terminal ID is ID information provided uniquely to the member store terminal 5 in the member store, imparted to the member store terminal 5 by the center server 2 at the time of installation as described later. The terminal ID is the information which is easy to recognize for the member store 102, such as 01, 02, ..., for example, in the order of installation of the member store terminals 5.

The serial ID is ID information provided uniquely to the member store terminal 5 in the electronic money system 1, so that the member store terminal 5 is specified by serial ID in the electronic money system 1.

As described later, the member store terminal 5 generates the serial ID using a random number at the time of installation of the terminal application and notifies it to the center server 2, while the center server 2 registers it as the serial ID of this member store terminal 5. The serial ID configures terminal identification information which specifies the member store terminal 5.

As described above, by configuring so that the serial ID is generated on the member store terminal 5 side, the time and effort for the electronic money center 100 to prepare the serial ID preliminarily and manage it until the terminal application is installed, enabling the electronic money system 1 being simplified.

In addition, the reason why two pieces of ID information, the serial ID and the terminal ID, are prepared to the member store terminal 5 is to give facilities to the member store 102. That is, in the member store 102, the member store terminals 5 are usually called such as No. 1, No. 2, ..., so that the terminal ID is easier to recognize than the serial ID for the member store 102.

For this reason, when inquiring the electronic money center 100 in the trouble of the member store terminal 5 or the like, the member store 102 can use the terminal ID usually used, which can reduce the burden of the member store 102.

The hardware information is information unique to the device or the like configuring the member store terminal 5, including a MAC Address, a manufacture serial number of the storage 30, a manufacture serial number of a the display unit, for example. The hardware information configures the unique information unique to the hardware configuring the member store terminal 5. The unique information stored in the storage 30 is registered so as to be used at the time of starting of the terminal application, and configures registration unique information.

The hardware information is acquired from this hardware at the time of installation of the terminal application, and is stored in the terminal side management information 44.

The member store terminal 5 collects the hardware information from this hardware at the time of starting of the terminal application and compares it with the hardware information stored in the terminal side management information 44, wherein the starting is continued when both match with each other or the starting is not performed when they do not match.

As described above, by acquiring the hardware information at the time of starting and comparing it with that acquired at the time of installation, it can prevent the terminal application being copied to and used by other computers.

Therefore, it is desirable that the device which acquires the hardware information is not easily replaceable.

Usually, it is rare for the member store terminal 5 to replace the storage 30 or the display unit, so that it can use such hardware information.

The operational log data 46 is history information accumulated at the time of operation of the member store terminal 5. The information recorded on the operational log data 46 includes, for example, date and time of starting/stopping the member store terminal 5, communication record with the center server 2, and communication record with the electronic money card 7.

Returning to FIG. 3 (a), the input/output interface (I/F) 26 is an interface for connecting the peripheral unit to the member store terminal 5 to extend the function of the member store terminal 5.

Any peripheral unit can be added as long as it suits the specification of the input/output interface 26. The peripheral unit which can be added includes, for example, the hard disk, a scanner, and a portable product management unit (unit carried by the person in charge of the member store 102 inside the store to input the status of the product).

The storage medium drive 28 is a drive for driving the detachable storage medium to read/write the data. The detachable storage medium includes, for example, a CD-ROM, the magneto-optic disk, the magnetic disk, a magnetic tape, the semiconductor memory, and a paper medium with the data punched. Note that the CD-ROM or the paper medium can be read only.

In the present embodiment, the electronic money center 100 stores the terminal application in the CD-ROM or the magneto-optic disk, for example, and distributes it to the member store 102, and the member store 102 sets it in the storage medium drive 28 to install the terminal application.

It may be configured so that the terminal application is distributed to the member store 102 via the network 4 and the member store 102 installs it.

FIG. 3(d) is a diagram schematically illustrating a configuration of the storage medium distributed by the electronic money center 100 to the member store 102.

A storage medium 43 is configured by the storage medium such as the CD-ROM, the magneto-optic disk, the flexible disk, or the semiconductor memory, for example, and is configured readable by the member store terminal 5. The storage medium 43 stores terminal application packaged software which is packaged software for installing the terminal application in the member store terminal 5.

The terminal application packaged software includes such as the install program product for installing the terminal application in the member store terminal 5 and the body program product of the terminal application.

While the electronic money center 100 assumes that the OS 40 is provided with a driver software of the reader/writer 5b, when the OS 40 is not provided with the driver software, it may be configured so that the driver software is prepared in the terminal application packaged software to be installed in the member store terminal 5 along with the terminal application.

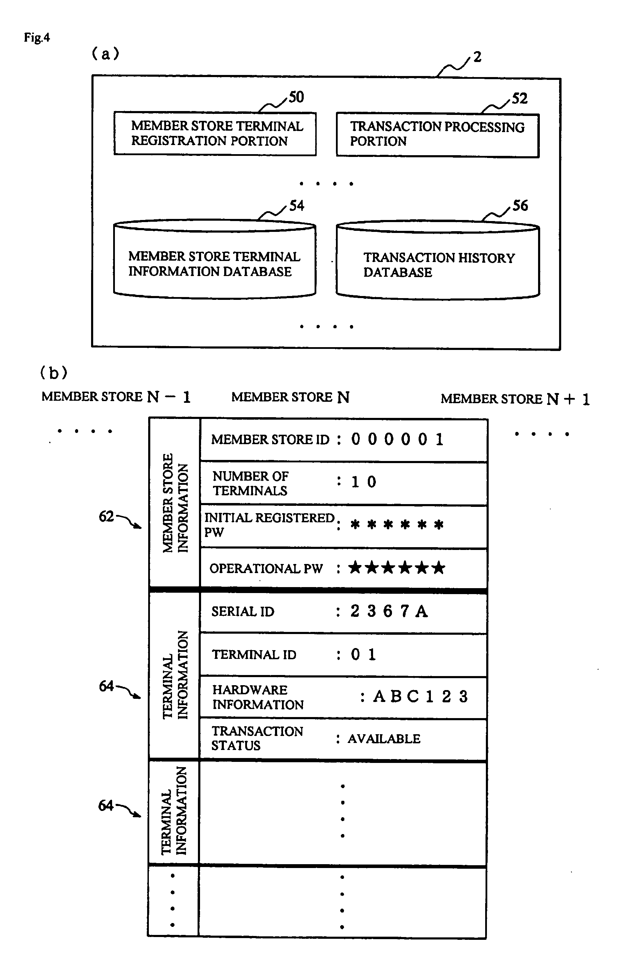

FIG. 4(a) is a block diagram schematically illustrating a functional configuration of the center server 2.

The center server 2 is configured by the computer and its hardware configuration is fundamentally similar to that of the terminal computer 5a. The center server 2 is configured by a member store terminal registration portion 50, a transaction processing portion 52, other non-illustrated processing portions, a member store terminal information database 54, a transaction history database 56, and other non-illustrated various functional portions (such as the interface with the network 4), as well as various databases.

Although management of each member store terminal 5 and information processing (such as addition and subtraction of the value) to the electronic money card 7 are performed by the center server 2 in an integrated manner in the present embodiment, it is not limited thereto and may be configured by the system which combines a plurality of server units.

For example, the system which performs similar functions with the center server 2 may be configured by connecting a member store terminal registration server which performs registration processing of the member store terminal 5 with a transaction processing server which performs information processing to the electronic money card 7 or other server units.

The member store terminal registration portion 50 is a functional portion which manages the new registration of the member store terminal 5.

The member store terminal registration portion 50 communicates with the member store terminal 5 when the terminal application is installed in the member store terminal 5 by the member store 102, and performs registration processing of this member store terminal 5.

Although described later in detail, by the registration processing, the member store terminal registration portion 50 issues the terminal ID to the member store terminal 5 or receives the serial ID of this member store terminal 5 from the member store terminal 5 to record the information unique to the member store terminal 5 on the member store terminal information database 54.

As described above, the member store terminal registration portion 50 registers the member store terminal 5 into the center server 2 by adding the information related to the new member store terminal 5 to the member store terminal information database 54 to update it.

The transaction processing portion 52 is a functional portion for processing an increase/decrease of the amount of money of the value stored in the electronic money card 7.

The center server 2 can communicate with the electronic money card 7 set to the member store terminal 5 in real time. In this case, the member store terminal 5 functions as a communication path to relay the communication between the center server 2 and the electronic money card 7.

The transaction processing portion 52 can increase/decrease the amount of money of the value stored in the electronic money card 7 by the predetermined amount of money by transmitting the addition/subtraction command to the electronic money card 7.

The transaction processing portion 52 can increase/decrease the value of the electronic money card 7 by the amount of money specified by the member store 102 in real time, and thereby it can enact the commercial transaction between the member store 102 and an owner of the electronic money card 7.

The transaction processing portion 52, when it performs the processing with the electronic money card 7, records the history on the transaction history database 56 to update it.

On the transaction history database 56, the information is recorded which is required to adjust the value at a later date, including date and time when the processing is performed, a card ID of the electronic money card 7 as a processing target, the added or subtracted amount of money, the serial ID of the member store terminal 5, and the member store ID, for example.

Moreover, the log data of the history information in the transaction history database 56 can be generated separately such as charging log data for the case when the electronic money card 7 is charged and settlement log data for the case when the settlement is carried out. By generating the log data separately as described above, the burden of the later adding up is reduced.

Here, adjustment (adding-up processing) of the value is described as follows in detail.

First, as for charging, after the member store 102 receives the money for the amount of paid money by the customer, it causes the center server 2 to generate the addition command for the amount of money and then adds the amount of money of the value by inputting it to the electronic money card 7 of the customer. Fund received by the member store from the customer is pooled (accumulated) in the electronic money center 100.

At a later date, the value for the amount of money settled at the member store 102 by the customer in exchange for the product is added up for each member store 102, and the amount of money for the value subtracted at the member store 102 as the price is distributed to each member store 102 from the pooled fund.

The value can be used as the exchange value equivalent to the money by associating the actual money with the value as described above.

As described above, the center server 2 is provided with adding up means for adding up the changed amount of money of the monetary value carried out to the electronic money card 7 using user specifying information (the information which specifies the member store, i.e., the member store ID) for every member store.

A business structure can also be possible where the third party referred to as an issuer is present and the money received from the customer is pooled as it is deposited in the issuer. When the several issuers are present, issuer identification information which identifies the issuer is stored in the electronic money card 7 in order to distinguish which issuer the value concerning the charging and settlement belongs to.

The center server 2 can recognize whether the value belonging to which issuer is used by acquiring the issuer identification information as well from the electronic money card 7 when the customer uses the electronic money card 7, which enables the value to be adjusted for every issuer.

A table may be prepared which associates the card ID with the issuer, so as to associate the value added/subtracted with the electronic money card 7 with the issuer using it.

FIG. 4(b) is a diagram illustrating an example of a logical configuration of the member store terminal information stored in the member store terminal information database 54.

The member store terminal information is generated for every member store, and the figure illustrates the member store terminal information related to an N-th member store.

Member store information 60 is configured by member store information 62 which is unique information related to the member store, and terminal information 64, 64, ..., generated for every member store terminal 5 installed in this member store.

The member store information 62 is generated by an operator of the electronic money center 100 to input, while the terminal information 64 is generated automatically when the terminal application is installed in the member store terminal 5.

The member store information 62 is configured by information such as the member store ID, the number of terminals, the initial registration password (PW), and the operational password (PW).

The member store ID is the ID information imparted uniquely to the member store 102 in the electronic money system 1, and the member store 102 can be specified using the member store ID.

The number of terminals is the number of the member store terminal 5 installed in this member store 102, and is inputted by application from the member store 102. Application of the number is notified to the electronic money center 100 using ordinary means of communications such as a telephone or a facsimile, for example.

After the terminal application is installed in all the member store terminals 5, the number of terminals of the member store information 62 and the number of the terminal information 64 are equal.

As described above, by setting the number of terminals preliminarily by the center server 2, the increase in the number of member store terminals 5 can be discovered easily when the terminal application is installed illegally.

The initial registration password is secret information for installation required when installing the terminal application in the member store terminal 5, which is set for every member store 102. The initial registration password can also be used as terminal allocation information for associating the serial ID generated at the member store terminal 5 with the member store ID stored in the member store information 62 at the time of installation of the terminal application.

The operational password is secret information required when starting the terminal application at the member store terminal 5, which is also set for every member store 102.

The terminal application packaged software distributed to the member store 102 has the initial registration password and the operational password incorporated therein, and these incorporated passwords correspond to the password set in the member store information.

Although the initial registration password and the operational password are set for every member store 102 in the present embodiment, it is not limited thereto and it can also be configured so that the passwords are set for every member store terminal 5. In this case, the security level can be increased further, though it increases the operational cost of the electronic money system 1 because the initial registration password and the operational password are managed for every member store terminal 5.

The terminal information is configured by the information such as the serial ID, the terminal ID, the hardware information, or a transaction status.

The serial ID is the ID information set uniquely for the member store terminal 5 in the electronic money system 1, and is generated by the member store terminal 5 at the time of installation of the terminal application.

The terminal ID is the ID information set uniquely for the member store terminal 5 in the member store 102, and is generated by the member store terminal registration portion 50 imparted to the member store terminal 5 at the time of installation of the terminal application.

As the terminal ID, a simple value such as 01, 02, ..., is imparted systematically in the order of installation of the member store terminal 5, and it is configured so that the member store 102 can easily recognize.

The hardware information is the identification information unique to predetermined hardware from which the member store terminal 5 is acquired at the time of installation of the terminal application.

In the present embodiment, the hardware information is configured so that it can be verified in the member store terminal 5 at the time of starting of the terminal application, and it is not necessary to be registered into the terminal information 64.

However, when it is configured that the hardware information is transmitted to the center server 2 and verified by the center server 2 at the time of starting of the terminal application, it is necessary to register the hardware information into the terminal information 64.

The transaction status is a parameter representing an availability status of the member store terminal 5 including "available" and "deletion."

While the transaction status of the terminal information 64 is maintained as "available" when the member store terminal 5 is working normally, it is set to "deletion" when any abnormality occurs to the member store terminal 5, such as when the member store terminal 5 is stolen, for example.

Setup of "deletion" is carried out by the center server 2 detecting the abnormality of the member store terminal 5 (for example, when the hardware information does not match at the member store terminal 5, the member store terminal 5 reports it to the center server 2) or is set by the operator of the electronic money center 100 with the report from the member store 102 (for example, when the member store terminal 5 is stolen).

The transaction processing portion 52 verifies the transaction status of the terminal information 64 when communicating with the member store terminal 5 at the time of processing of the electronic money card 7.

The transaction processing portion 52 performs transaction when the transaction status is "available," or does not perform transaction when the transaction status is "deletion."

As described above, by verifying the status of the member store terminal 5 before processing the electronic money card 7, the security level of the electronic money system 1 can be increased.

As described above, the member store terminal information database 54 configures registration information storage means for storing the user specifying information (member store ID), the terminal allocation information (information which can specify the member store such as the member store ID and the initial registration password), and the terminal identification information (serial ID) in association with each other.

The operational password configures the secret information for starting to start the member store terminal 5.

In addition, the center server 2 is provided with input means for the operator to input the member store ID, the initial registration password, and other information into the member store information 62.

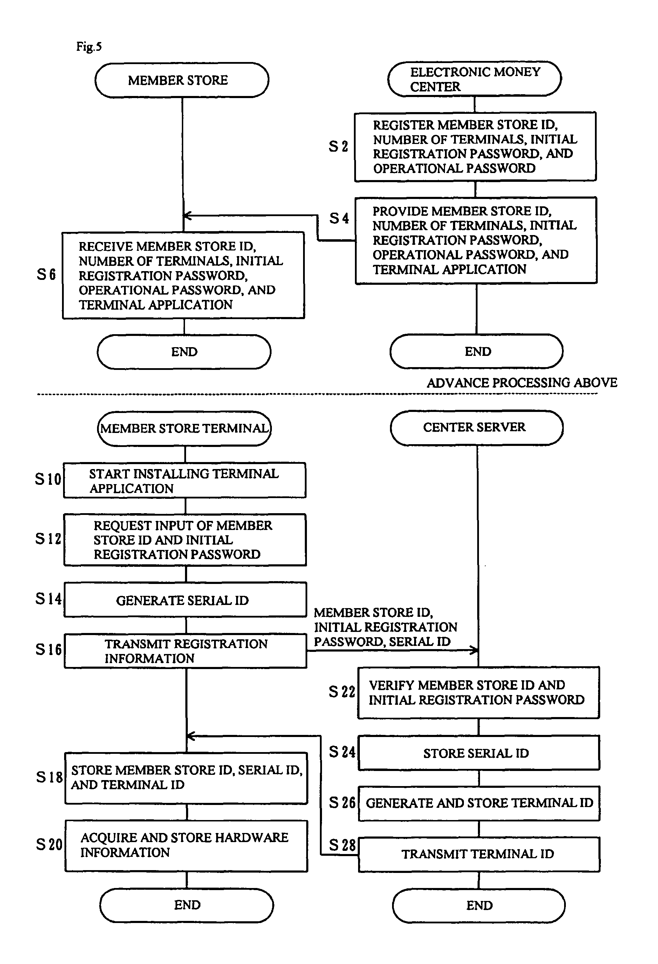

Next, there is described the procedure for installing the terminal application in the member store terminal 5 using a flow chart of FIG. 5.

First, as advance preparation for installing the terminal application in the member store terminal 5 (the terminal application has not been installed yet), it is necessary for the electronic money center 100 to supply the terminal application packaged software to the member store 102. The advance preparation is performed by the following procedure.

First, when the electronic money center 100 receives a request of provision of the packaged software from the member store 102 (carried out by an ordinary communication method such as the telephone), the electronic money center 100 sets the member store ID, the initial registration password, and the operational password for this member store 102. The number of installation of the member store terminals 5 is then acquired from the member store 102, and the operator creates and registers the member store information 62 for this member store 102 into the member store terminal information database 54 (Step 2).

Furthermore, the electronic money center 100 configures the terminal application packaged software so that it functions with the initial registration password and the operational password which have been set (i.e., the initial registration password and the operational password are incorporated into the terminal application packaged software) and store it in the storage medium 43.

The electronic money center 100 then notifies the member store ID, the number of the registered terminals, the initial registration password, and the operational password to the member store 102, while providing the storage medium 43 which stores the terminal application packaged software to the member store 102 (Step 4).

The member store 102 receives the member store ID, the number of the registered terminals, the initial registration password, the operational password, and the storage medium 43 which stores the terminal application packaged software from the electronic money center 100.

While the information is delivered by an account executive of the electronic money center 100 to the member store 102 for safety, it may be provided to the member store 102 by mail or other means.

The member store 102, for installing the terminal application in the member store terminal 5, sets the storage medium 43 in the storage medium drive 28 (FIG. 3) and starts the install program contained in the terminal application packaged software. Thereby, installation of the terminal application is started (Step 10).

The following operation is performed by the CPU 12 (FIG. 3) in accordance with the install program.

First, the member store terminal 5 displays the initial registration password entry screen on the display unit and requires the input of the member store ID and the initial registration password (secret information for installation request function) (Step 12).

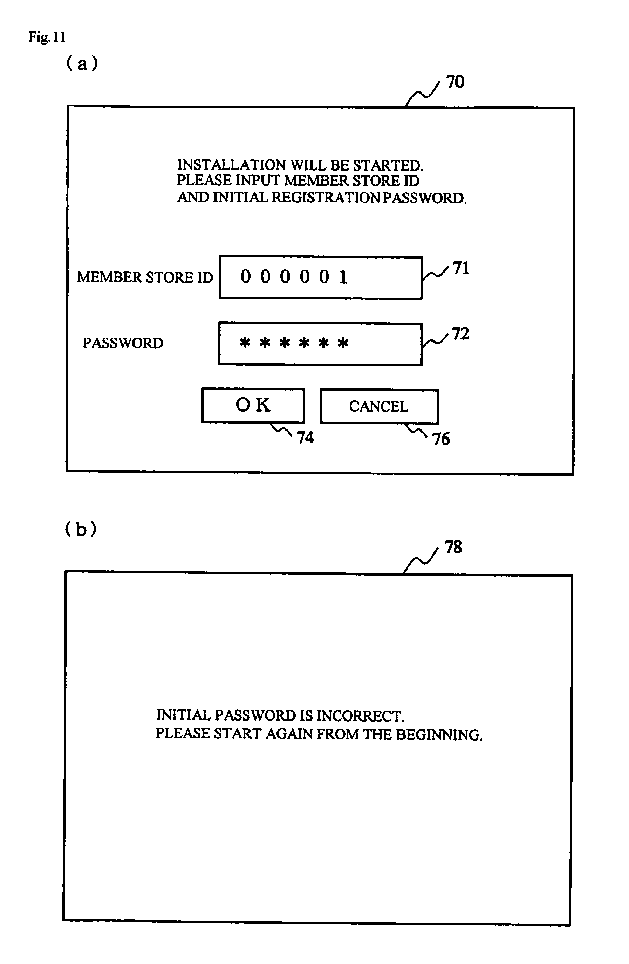

Here, FIG. 11(a) is a diagram illustrating an example of the initial registration password entry screen. As illustrated, the initial registration password entry screen is provided with a member store ID entry column 71, an initial registration password entry column 72, an OK button 74, and a cancel button 76.

The member store 102 uses the input unit 18 to input the member store ID and the initial registration password notified from the electronic money center 100 to the member store ID entry column 71 and the initial registration password entry column 72, respectively, and selects the OK button 74 by such as mouse operation. When the cancel button 76 is selected, the inputted items are canceled.

When the OK button 74 is selected, the CPU 12 checks the initial registration password set preliminarily by the electronic money center 100 with the initial registration password inputted by the member store 102, wherein the installation processing is continued when both match with each other or an error screen as illustrated in FIG. 11(b) is displayed and the installation processing is stopped (installation processing restriction function) when they do not match with each other.

Returning to FIG. 5, the member store terminal 5, after verifying that the initial registration password set by the electronic money center 100 matches with the initial registration password inputted by the member store 102, generates the random number and generates the serial ID using it (Step 14). The generated random number may be employed as the serial ID as it is, or the serial ID is created using the generated random number.

Next, the member store terminal 5 is connected with the center server 2 to transmit the member store ID, the initial registration password, and the generated serial ID to the center server 2 (Step 16). As described above, the member store terminal 5 is provided with terminal registration information transmitting means for transmitting the terminal identification information (serial ID) and the terminal allocation information (such as the initial registration password and the member store ID).

In response, the center server 2 (member store terminal registration portion 50) receives the member store ID, the initial registration password, and the serial ID from the member store terminal 5 (terminal identification information receiving means).

The member store terminal registration portion 50 then searches the member store information 62 in the member store terminal information database 54 to verify that the member store information 62 is present on which the member store terminal ID and the initial registration password transmitted from the member store terminal 5 are recorded (Step 22).

When the member store terminal ID and the initial registration password can not be verified, the processing is stopped and an alarm is transmitted to the member store terminal 5.

When the member store terminal ID and the initial registration password can be verified, the member store terminal registration portion 50 generates the terminal information 64 (FIG. 4(b)) by associating it with the member store information 62 on this member store 102 and stores the serial ID received from the member store terminal 5 to it (terminal registration means) (Step 24).

Next, the member store terminal registration portion 50 generates the terminal ID of this member store terminal 5 and stores it to the terminal information 64 (Step 26).

The member store terminal registration portion 50, and then transmits the generated terminal ID to the member store terminal 5 (Step 28).

The member store terminal 5 receives the terminal ID from the center server 2. Subsequently, the member store ID, the serial ID, and the terminal ID received from the center server 2 are stored in the data storing portion 36 as the terminal side management information 44 (FIG. 3(c)) (Step 18).

As described above, the member store terminal 5 is provided with terminal identification information generation means for generating and storing the terminal identification information (serial ID).

Next, the member store terminal 5 searches the presence of predetermined hardware in the member store terminal 5, acquires the hardware information from this hardware, and stores it to the data storing portion 36 (unique information storage function) (Step 20).

Although not illustrated, the acquired hardware information is transmitted to the center server 2 and stored in the terminal information 64.

The member store terminal 5 transmits the notice of the completion of installation to the center server 2 when it completes the above installation processing, and the member store terminal registration portion 50 receives it and sets the transaction status of the terminal information 64 to "available."

Although the hardware information is acquired and stored at the time of installation of the terminal application in the present embodiment, the time of acquisition and storing may be after the installation as long as they are carried out until the member store terminal 5 initially performs processing (inputs the processing instruction) for the electronic money card 7.

From the above procedure, the terminal application can be installed in the member store terminal 5 while the center server 2 can generate the member store information 62 for the member store 102 and generate the terminal information 64 for this member store terminal 5.

When installing a plurality of member store terminals 5, the member store 102 installs the terminal application sequentially. In the meantime, the center server 2 supervises so that the number of terminals which are installed with the application does not exceed the number of terminals of the member store information 62.

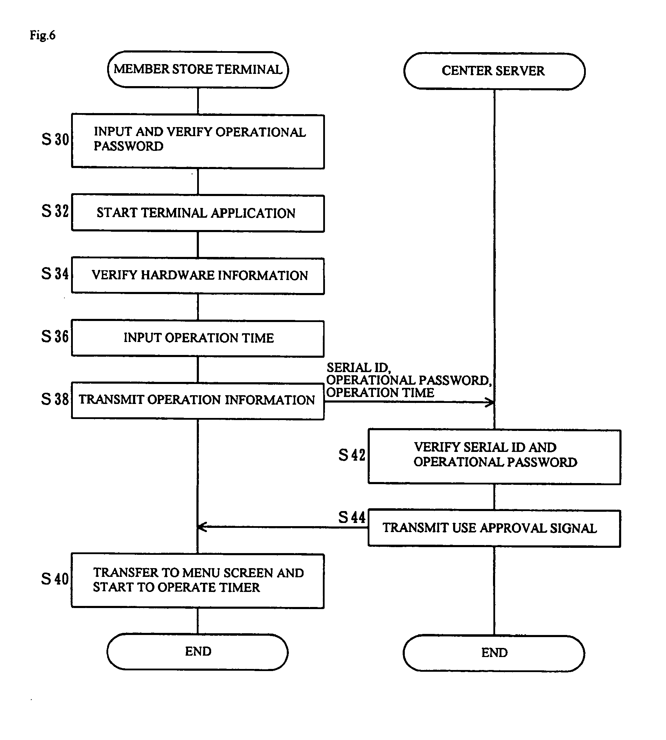

Next, there is described the procedure for starting the terminal application installed in the member store terminal 5 using a flow chart of FIG. 6.

The member store 102 starts the member store terminal 5 at the time of opening the store (referred to as starting of office) and stops the member store terminal 5 at the time of closing (referred to as closing of office). The following processing is performed for every starting of office.

When the member store 102 is a store which opens 24 hours a day, the processing is carries out for every closing time of the cash register (in the 24-hour store, the cash register is usually closed for several times a day as the closing time).

First, the person in charge of the member store 102 turns on a power supply of the member store terminal 5 and inputs the starting command of the terminal application.

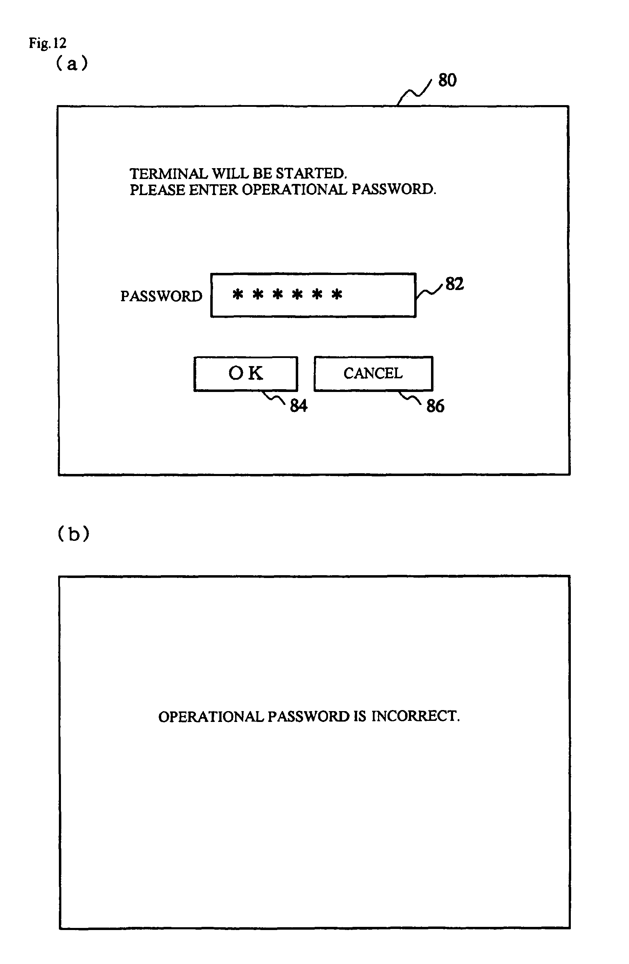

Thereby, an operational password verification program starts and an operational password entry screen 80 as illustrated in FIG. 12(a) is displayed on the display unit.

The operational password entry screen 80 is provided with an operational password entry column 82, an OK button 84, and a cancel button 86, and the member store 102 inputs the operational password into the operational password entry column 82 and selects the OK button 84. When the cancel button 86 is selected, the operational password is inputted again. The operational password entry screen 80 configures secret information for start requesting means.

Returning to FIG. 6, the member store terminal 5, when the OK button 84 is selected, verifies that the operational password which is inputted by the person in charge of the member store terminal 5 matches with the operational password set by the electronic money center 100 (incorporated in the terminal application) (Step 30), and starts the terminal application (Step 32).

When the operational passwords do not match with each other, the error screen as illustrated in FIG. 12(b) is displayed and the terminal application is not started.

Next, the member store terminal 5 searches predetermined hardware in the member store terminal 5 and acquires the hardware information from this hardware (unique information acquisition means). It is then verified to match with the hardware information stored as the terminal side management information 44 (FIG. 3(c)) at the time of installation (Step 34).

When the pieces of hardware information do not match with each other, starting of the terminal application is stopped and the alarm is provided.

As described above, the member store terminal 5 is provided with restriction means for restricting the input of the command to the electronic money card 7 so that various kinds of commands cannot be inputted to the electronic money card 7 when the pieces of hardware information do not match with each other. Although starting of the terminal application is stopped as an example of a restriction method in the present embodiment, it may be restricted by other methods. Moreover, it can restrict inputting of some of the commands instead of restricting the input of the commands at all.

After verifying matching of the hardware information, the member store terminal 5 displays an operation time entry screen which is not illustrated for the person in charge of the member store 102 to input the operation time (Step 36). As described above, the member store terminal 5 is provided with operation time receiving means.

The terminal application is provided with a module (timer) which measures time, and it carries out the closing of office automatically when the installed operation time passes. The operation time is notified to the center server 2, and this center server 2 supervises this. Therefore, when the member store terminal 5 is operated for long time which substantially exceeds the operation time set preliminarily, the center server 2 recognizes that a certain abnormality occurs.

Since it may be the case where a clock of the member store terminal 5 and the clock of the center server 2 do not correspond to each other, the clock of the member store terminal 5 is used for carrying out the closing of office of the member store terminal 5.

It can also be configured so that, when the operation time passes, a signal is transmitted to the member store terminal 5 from the center server 2 to stop the operation of the member store terminal 5.

The member store terminal 5, when the operation time is inputted, transmits the operation information configured by the serial ID, the operational password, the operation time, or the like to the center server 2 (Step 38).

The center server 2 acquires the operational password set in this member store 102 from the member store information 62 using the serial ID transmitted from the member store terminal 5 to verify that it matches with the operational password received from the member store terminal 5 (Step 42). The center server 2, and then transmits a use approval signal to the member store terminal 5 (Step 44) and starts measurement of the operation time.

When the operational passwords do not match, the alarm is transmitted to the member store terminal 5.

When the use approval signal is received from the center server 2, the member store terminal 5 starts the terminal application, transfer the screen to a menu screen which is not illustrated, and starts measurement of the operation time (Step 40).

The person in charge of the member store 102 selects a predetermined item from the menu screen to start the usual charging and settlement service.

As described above, the member store terminal 5 is configured so that the operational password is inputted at the time of starting of the terminal application, and thus a person who does not know the operational password cannot start the member store terminal 5, enabling to increase the security level.

Moreover, the operation time is set at the time of starting and the closing of office is performed automatically when the operation time passes, so that it can prevent the member store terminal 5 to operate for unnecessarily and the center server 2 can find the abnormality of the member store terminal 5 more easily.

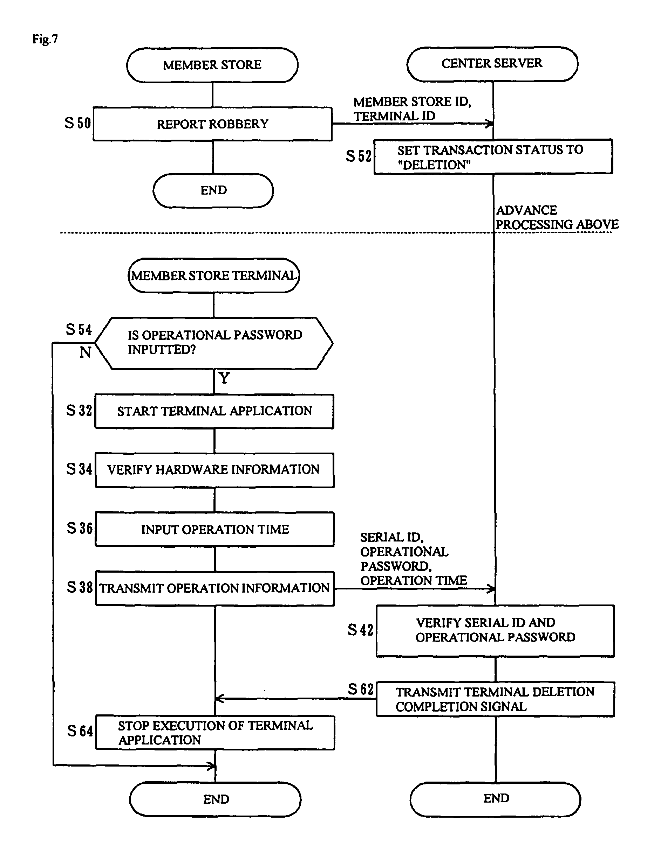

Next, there is described the procedure when the member store terminal 5 is stolen using a flow chart of FIG. 7.

Note that the same step numbers are provided to the same steps as FIG. 6. First, as advance processing, the member store 102 notifies the member store ID and the terminal ID of this member store terminal 5 to the electronic money center 100 when the member store terminal 5 is stolen (Step 50). The notification is carried out using ordinary contact means such as the telephone, for example.

In the electronic money center 100, when a robbery report is received from the member store 102, the operator operates the center server 2 to set the transaction status of the terminal information 64 of this member store terminal 5 (FIG. 4 (b)) from "available" to "deletion" (Step 52).

The advance processing is completed in the above procedure.

If the third party tries to start the stolen member store terminal 5, it cannot input the operational password because it does not know the operational password (Step 54; N), so that the member store terminal 5 is terminated without starting the terminal application.

If the third party is able to obtain and input the operational password (Step 54; Y), the member store terminal 5 starts the terminal application as with the flow chart of FIG. 6 (Step 32), verifies the hardware information (Step 34), receives the input of the operation time (Step 36), and transmits the operation information to the center server 2 (Step 38).

The center server 2 receives the operation information from the member store terminal 5, and verifies the serial ID and the operational password (Step 42).

Furthermore, the center server 2 verifies the transaction status of the terminal information 64 of this member store terminal 5 (FIG. 4 (b)) and detects that the transaction status is set to "deletion."

The center server 2 then generates a terminal deletion completion signal, and transmits it to the member store terminal 5 (Step 62).

In the member store terminal 5, the terminal application is configured so that the starting is stopped when receiving the terminal deletion completion signal and the member store terminal 5 receives the terminal deletion completion signal from the center server 2 to stop the starting of the terminal application (Step 64).

As described above, if the third party acquires the member store terminal 5, it cannot start the terminal application because he/she does not know the operational password, or, even when he/she knows the operational password, it cannot start the terminal application because the transaction status is set to "deletion" on the center server 2 side.

Moreover, when the third party tries to analyze the member store terminal 5 to acquire the operational password, it is predicted that acquisition of the operational password requires the large amount of time even when it succeeds, which can stall for a time for reporting the robbery from the member store 102 to the electronic money center 100.

Next, there is described a case where the terminal application is acquired from the storage 30 of the member store terminal 5 and copied to other computers. Here, assume that the terminal side management information 44 is also copied along with the terminal application.

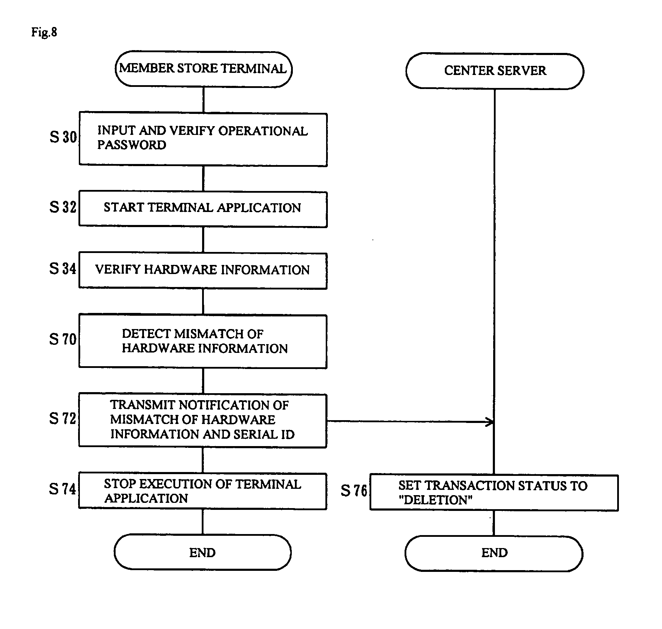

FIG. 8 is a flow chart for illustrating operation of the member store terminal 5 of a copy destination of the terminal application. The same step numbers are provided to the same steps as FIG. 6.

Similar to FIG. 6, the member store terminal 5 receives the input of the operational password, verifies it (Step 30), and starts the terminal application (Step 32).

Next, the member store terminal 5 acquires the hardware information from the predetermined hardware of the member store terminal 5, and compares it with the hardware information stored as the terminal side management information 44.

Since the hardware information acquired this time is the hardware information of the member store terminal 5 which is the copy destination and the hardware information stored as the terminal side management information 44 is the hardware information of the member store terminal 5 which is a copy source, they do not match with each other.

Consequently, the member store terminal 5 detects the mismatch of the hardware information (Step 70), and transmits the signal which indicates that the hardware information does not match and the serial ID to the center server 2 (Step 72).

After detecting the mismatch of the hardware information, the member store terminal 5 stops execution of the terminal application (Step 74).

Meanwhile, the center server 2 sets the transaction status of the terminal information 64 (FIG. 4 (b)) specified by this serial ID to "deletion."

As described above, the hardware information does not match if the terminal application is copied from the member store terminal 5 to other computers, the terminal application cannot be started by the computer of the copy destination.

Moreover, by the center server 2 to detect the mismatch of the hardware information and sets the transaction status to "deletion," the use of the member store terminals 5 concerning the copy destination and the copy source can be made unavailable.

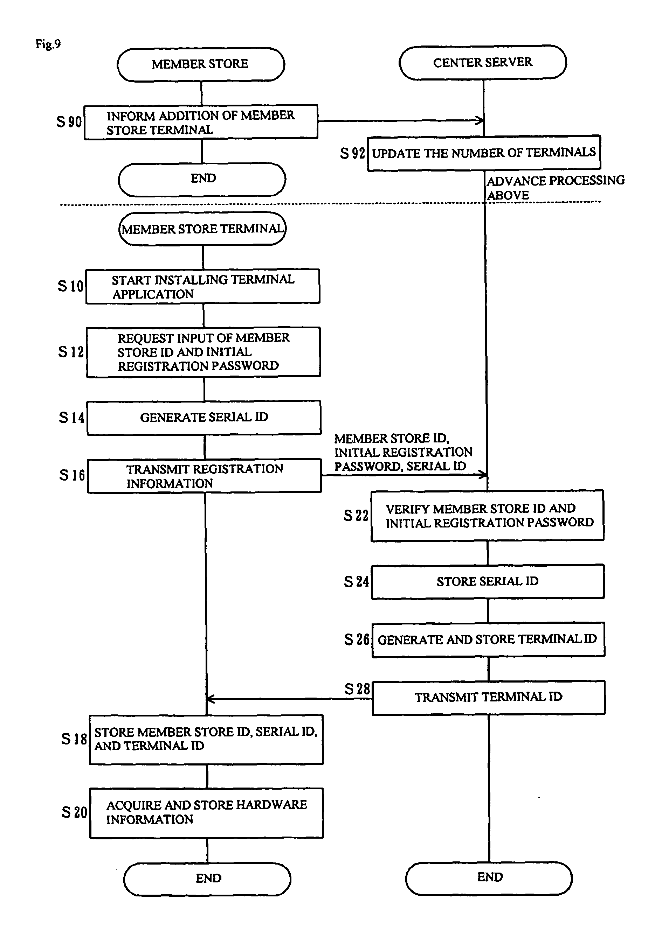

Next, there is described the procedure where the member store 102 adds the member store terminal 5 using a flow chart of FIG. 9.

Since the number of the member store terminals 5 is managed by the center server 2, when adding the member store terminal 5, the member store 102 informs that it adds the member store terminal 5 to the electronic money center 100 (Step 90). The information is performed using the ordinary communication means such as the telephone and the facsimile, and the member store 102 notifies the member store ID, the number of addition, or the like to the electronic money center 100.

The electronic money center 100 receives the information, and the operator operates the member store information 62 (FIG. 4 (b)) on this member store 102 to update the number of the terminals to the number of the terminals after addition.

After the electronic money center 100 updates the number of the terminals, the member store 102 installs the terminal application in accordance with the procedure for installing the terminal application described using FIG. 5.

Hereinbelow, the same step numbers are provided to the same steps as FIG. 5, and the description thereof is omitted.

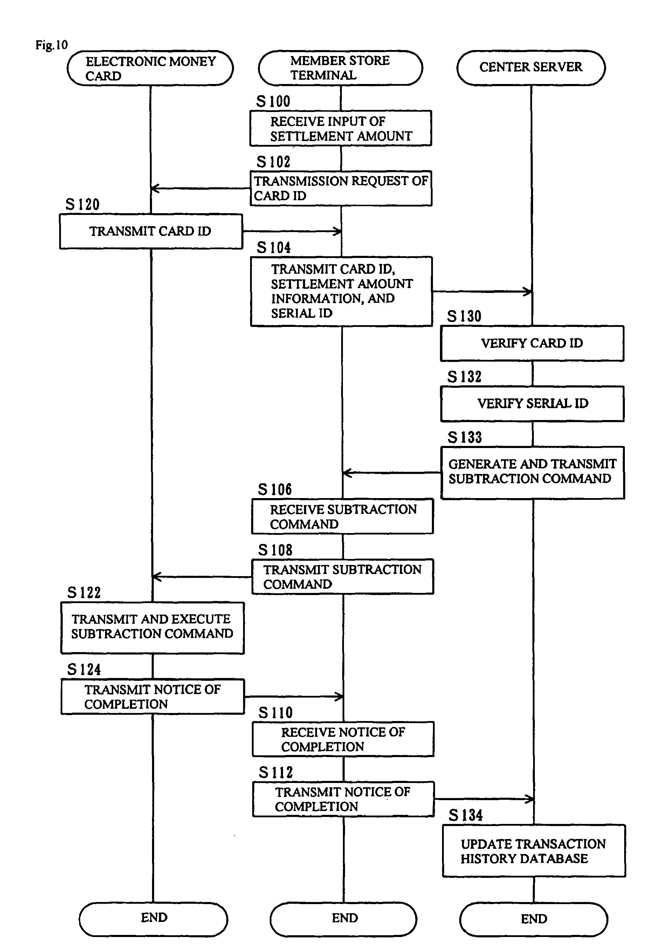

Next, there is described the procedure performed by the member store terminal 5 to the electronic money card 7 when using the member store terminal 5 by routine work using a flow chart of FIG. 10. The following processing is performed for the member store terminal 5 by the CPU 12 (FIG. 3(a)) in accordance with the terminal application and for the electronic money card 7 by the CPU 704 (FIG. 2(a)) in accordance with the value processing program. In addition, the processing of the center server 2 is performed by the transaction processing portion 52 (FIG. 4 (a)).

As an example, there is described when the customer shops at the member store 102 and pays the price by the value stored in the electronic money card 7.

First, the customer presents the product to purchase to the person in charge (cashier) of the member store 102 and sets the electronic money card 7 to the reader/writer 5b of the member store terminal 5.

The person in charge of the member store 102 inputs the amount of the price of the product into the member store terminal 5. This input uses the ten keys or a bar code.

The member store terminal 5 receives the price amount of money of settlement (Step 100) and requests transmitting of the card ID to the electronic money card 7 (Step 102).

The electronic money card 7 receives the request from the member store terminal 5, and the value processing portion 7a (FIG. 1) reads the card ID from the card ID storage portion 7d to transmit it to the member store terminal 5 (Step 120).

The member store terminal 5 receives the card ID from the electronic money card 7, and transmits the card ID, the settlement amount information, the serial ID of the member store terminal 5, or the like to the center server 2 (Step 104).

The center server 2 receives the information (terminal identification information receiving means) and verifies the card ID first (Step 130). The center server 2 manages the information concerning each electronic money card for every card ID, and, using the information, verifies whether the electronic money card 7 is duly used, such as the card ID transmitted from the member store terminal 5 is present or it is not listed as being used illegally.

Next, using the serial ID of the member store terminal 5, it verifies that the transaction status (FIG. 4 (b)) of this member store terminal 5 is "available" (Step 132) and generates the subtraction command which subtracts the value for the settlement amount to transmit it to the member store terminal 5 (Step 133).

The member store terminal 5 receives the subtraction command from the center server 2 (Step 106), and transmits it to the electronic money card 7 via the reader/writer 5b (Step 108).

The electronic money card 7 receives the subtraction command, and the value processing portion 7a performs it to subtract the value balance stored in the balance storage portion 7b by the settlement amount (Step 122). Furthermore, the value processing portion 7a writes the information of processing related to the processing of this time in the log data storage portion 7c to update the log data.

The value processing portion 7a, when the subtraction processing is completed, transmits the notice of completion to the member store terminal 5 (Step 124).

The member store terminal 5 receives the notice of completion (Step 110), and transmits it to the center server 2 (Step 112).

The center server 2 receives the notice of completion from the member store terminal 5 and updates the transaction history database 56 (Step 134).

Although the case of settlement has been described above, the charging can be performed by the similar procedure.

In other words, the customer sets the electronic money card 7 to the reader/writer 5b while handing the money by the amount of money for charging to the person in charge of the member store 102.

Meanwhile, the person in charge of the member store 102 requests transmitting of the addition command which adds the value for the amount of money for charging to the center server 2, and the center server 2 transmits the addition command to the member store terminal 5 by verifying the card ID, the serial ID of the member store terminal 5, or the like.

The member store terminal 5 transmits the addition command to the electronic money card 7, and the electronic money card 7 executes the addition command to add the value.

Thereby, the customer can accumulate the value by the amount of money handed to the member store 102 in the electronic money card 7.

Although an example of the present embodiment has been described above, the following modifications are also possible although an example of this embodiment was explained.

### (First Modification)

This modification verifies the hardware information by the center server 2.

At the time of starting of the member store terminal 5, the member store terminal 5 acquires the hardware information from predetermined hardware, and transmits it with the serial ID of the member store terminal 5 to the center server 2.

The center server 2 searches the hardware information stored in the terminal information 64 (FIG. 4 (b)) using the serial ID compares it with the hardware information transmitted from the member store terminal 5.

The center server 2 then transmits the use approval signal to the member store terminal 5 when they match with each other, or transmits a use approval signal to the member store terminal 5 when they does not match.

The member store terminal 5 starts the terminal application when it receives the use approval signal, or does not start the terminal application when it receives the use disapproval signal.

As described above, by verifying the hardware information on the center server 2 side, it can respond to the case where the hardware information is altered in the terminal side management information 44 (FIG. 3 (b)), for example.

### (Second Modification)

This modification verifies the initial registration password by the center server 2.

In this case, package identification information unique to the terminal application packaged software (FIG. 3 (d)) is set. The center server 2 stores the combination of the package identification information and the initial registration password in the member store information 62 (FIG. 4 (b)).

The member store terminal 5, at the time of installation of the terminal application, transmits the initial registration password inputted by the user, the package identification information, and the serial ID to the center server 2, and the center server 2 verifies whether they match with the combination stored previously.

The center server 2 transmits an installation approval signal to the member store terminal 5 when the combination of the package identification information and the initial registration password transmitted from the member store terminal 5 match with the combination stored previously, or transmits an installation disapproval signal to the member store terminal 5 when they do not match.

The member store terminal 5 continues installation when it receives the installation approval signal, or stops installation when it receives the installation disapproval signal.

In this modification, approval/disapproval of installation of the terminal application can be controlled by the center server 2.

### (Third Modification)

This modification verifies the operational password by the center server 2.

In this case, the center server 2 stores the combination of the serial ID and the operational password in the terminal information 64 (FIG. 4 (b)). The member store terminal 5 transmits the serial ID and the operational password which is inputted by the user at the time of starting to the center server 2, and the center server 2 verifies whether they match with the combination stored previously.

The center server 2 transmits an operation approval signal to the member store terminal 5 when the combination of the serial ID and the operational password transmitted from the member store terminal 5 match with the combination stored previously, or transmits an operation disapproval signal to the member store terminal 5 when they do not match.

The member store terminal 5 continues starting of the terminal application when it receives the operation approval signal, or stops starting when it receives the operation disapproval signal.

In this modification, approval/disapproval of starting of the terminal application can be controlled by the center server 2.

According to the present embodiment and the modifications described above, the following effects can be acquired.
(1) In using the electronic money system 1, the member store 102 does not need to be provided with the dedicated terminal, enabling to reduce the introductory cost of equipment.
(2) The electronic money center 100 does not need to manage the dedicated terminal. Moreover, since the general-purpose computer can be used as the member store terminal 5, it can respond to the case where a large number of the member store terminals 5 need to be introduced at one time.
(3) Since the input of the initial registration password is needed at the time of installation of the terminal application, it can prevent that the third party installs the terminal application freely.
(4) Since the input of the operational password is needed at the time of starting of the terminal application, the third party cannot start the terminal application when the member store terminal 5 is stolen.
(5) Since the hardware information is checked at the time of starting of the terminal application, the terminal application cannot be started when the terminal application in the member store terminal 5 is copied to other computers.
(6) At the time of starting of the terminal application, the operation time can be set preliminarily and the operation of the terminal application can be stopped automatically when the set operation time passes. Moreover, the center server 2 can also know the operation time set by the member store terminal 5 and can supervise the operation status of the member store terminal 5.

## Claims

1. A terminal unit for receiving a processing instruction from a predetermined server unit and inputting it to a mobile unit comprising money information storage means for storing money information which represents the amount of money of a monetary value as electronic data, and money information processing means for modifying the amount of money represented by said stored money information by executing said predetermined processing instruction, comprising:
unique information acquisition means for acquiring unique information from a predetermined hardware which configures said terminal unit at predetermined time, the unique information being unique to said hardware; and
restriction means for restricting input processing of said processing instruction to said mobile unit when said acquired unique information does not match with registered unique information registered preliminarily as the unique information of said hardware.

2. The terminal unit according to claim 1, comprising a unique information storage means for acquiring said unique information of said hardware and storing it to a predetermined storing destination before initially inputting said processing instruction to said mobile unit,
wherein said restriction means uses said stored unique information as said registered unique information.

3. The terminal unit according to claim 1 or 2, comprising secret information for starting requesting means for requesting an input of the secret information for starting at the time of starting of said terminal unit,
wherein said restriction means restricts input processing of said processing instruction to said mobile unit when the secret information for starting inputted in response to said request does not match with the secret information for starting set preliminarily for said terminal unit.

4. The terminal unit according to claims 1,2, or claim 3, wherein said predetermined server unit comprises registration information storage means for storing user specifying information which specifies a user of said terminal unit, terminal allocation information allocated to said terminal unit, and terminal identification information of said terminal unit in association with each other, comprising:
terminal identification information generation means for generating terminal identification information which identifies said terminal unit and stores it in a storage unit installed in said terminal unit; and
terminal registration information transmitting means for transmitting said generated terminal identification information and said terminal allocation information to said predetermined server unit,
wherein said terminal unit, after transmitting said terminal identification information and said terminal allocation information, uses said terminal identification information for said predetermined server unit as the information for identifying said terminal unit.

5. The terminal unit according to any one of claims 1 through 4, comprising operation time receiving means for receiving the input of continuous operation time of said terminal unit,
wherein said restriction means restricts the input processing of said processing instruction to said mobile unit when said received continuous operation time passes from the starting of said terminal unit.

6. A server unit for transmitting said processing instruction to the terminal unit according to claim 4, comprising:
registration information storage means for storing user specifying information which specifies a user of said terminal unit, terminal allocation information allocated to said terminal unit, and terminal identification information of said terminal unit in association with each other;
input means for inputting said user specifying information and said terminal allocation information into said registration information storage means;
terminal identification information receiving means for receiving said terminal identification information transmitted from said terminal unit, and said terminal allocation information; and
terminal registration means for storing the user specifying information corresponding to said terminal allocation information and said received terminal identification information in association with each other.

7. The server unit according to claim 6, comprising:
terminal identification information receiving means for receiving terminal identification information of said terminal unit from said terminal unit at the time of transmitting a processing instruction to said terminal unit;
user specifying information acquisition means for acquiring user specifying information associated to said terminal identification information by checking said received terminal identification information with terminal identification information stored by said terminal registration means; and
adding-up means for adding up the changed amount of money of a monetary value accompanying said processing instruction transmitted to said terminal unit for a user specified by said acquired user specifying information.

8. A terminal verification method performed by a terminal unit for receiving a processing instruction from a predetermined server unit and inputting it to a mobile unit comprising money information storage means for storing money information which represents the amount of money of a monetary value as electronic data, and money information processing means for modifying the amount of money represented by said stored money information by executing said predetermined processing instruction, wherein said terminal unit comprises unique information acquisition means and restriction means,
the method comprising the steps of:
unique information acquisition for acquiring unique information from the predetermined hardware which configures said terminal unit at predetermined time by said unique information acquisition means, the unique information being unique to said hardware; and
restriction for restricting input processing of said processing instruction to said mobile unit when said acquired unique information does not match with registered unique information registered preliminarily as the unique information of said hardware by said restriction means.

9. A terminal program product for implementing a function by a terminal unit constituted by a computer for receiving a processing instruction from a predetermined server unit and inputting it to a mobile unit comprising money information storage means for storing money information which represents the amount of money of a monetary value as electronic data, and money information processing means for modifying the amount of money represented by said stored money information by executing said predetermined processing instruction, wherein the computer implements:
a unique information acquisition function for acquiring unique information from the predetermined hardware which configures said terminal unit at predetermined time, the unique information being unique to said hardware; and
a restriction function for restricting input processing of said processing instruction to said mobile unit when said acquired unique information does not match with registered unique information registered preliminarily as the unique information of said hardware.

10. The terminal program product according to claim 9, wherein the computer implements:
a secret information for installation request function for requesting input of secret information for installation at the time of installation of said terminal program product into the computer; and
an installation processing restriction function for restricting installation processing of said terminal program product when the secret information for installation inputted in response to said request does not match with the secret information for installation set preliminarily for said terminal program product.

11. The terminal program product according to claim 9 or 10, implementing a unique information storing function for acquiring said unique information unique to said hardware from predetermined hardware which configures said terminal unit and storing it to a predetermined storing destination at the time of installation of said terminal program product to said terminal unit,
wherein said restriction function uses said stored unique information as said registered unique information.

12. The terminal program product according to claims 9,10,or claim 11, wherein said predetermined server unit comprises registration information storage means for storing user specifying information which specifies a user of said terminal unit, terminal allocation information allocated to said terminal unit, and terminal identification information of said terminal unit in association with each other, wherein the computer implements:
a terminal identification information generation function for generating terminal identification information which identifies said terminal unit and stores it in a storage installed in said terminal unit; and
a terminal registration information transmitting function for transmitting said generated terminal identification information and said terminal allocation information to said predetermined server unit.

13. A computer-readable storage medium for storing the terminal program product according to any one of claims 9 through 12.
